(19) Europäisches Patentamt / European Patent Office / Office européen des brevets

(11) **EP 1 808 811 B1**

(12) **FASCICULE DE BREVET EUROPEEN**

(45) Date de publication et mention de la délivrance du brevet:
**22.08.2018 Bulletin 2018/34**

(51) Int Cl.:
***G06T 3/40*** *(2006.01)*

(21) Numéro de dépôt: **07290030.1**

(22) Date de dépôt: **10.01.2007**

(54) **Procédé de traitement, par exemple d'insertion des contours d'une image numérique et dispositif correspondant**

Verfahren zur Datenverarbeitung, beispielsweise zum Einfügen von Konturen eines digitalen Bildes, und entsprechende Vorrichtung

Method of processing, for example, the insertion of contours of a digital image, and corresponding device

(84) Etats contractants désignés:
**DE FR GB IT**

(30) Priorité: **17.01.2006 FR 0600415**

(43) Date de publication de la demande:
**18.07.2007 Bulletin 2007/29**

(73) Titulaires:
• **STMicroelectronics SA**
  **92120 Montrouge (FR)**
• **STMicroelectronics Asia Pacific Pte Ltd.**
  **Singapore 569508 (SG)**

(72) Inventeurs:
• **Lebowsky, Fritz**
  **38410 Saint Martin d'Uriage (FR)**
• **Huang, Yong**
  **541258 Singapore (SG)**
• **Wang, Haiyun**
  **738086 Singapore (SG)**

(74) Mandataire: **Zapalowicz, Francis**
  **Casalonga & Partners**
  **Bayerstrasse 71/73**
  **80335 München (DE)**

(56) Documents cités:
US-A- 4 654 711      US-A- 5 305 398
US-A1- 2003 039 409

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne le traitement d'images numériques, en particulier le traitement des zones de contour d'une image numérique ayant subi une transformation, par exemple un agrandissement.

Classiquement, l'image hors contour est traitée dans son ensemble, et parallèlement on effectue un traitement des contours, horizontaux et verticaux pour une image en deux dimensions. A l'issue de chaque traitement, identique pour tous les contours, ces derniers sont insérés dans l'image selon une méthode linéaire classique.

Généralement celle-ci met en oeuvre un mélangeur entre les contours verticaux et horizontaux traités obtenus, selon l'orientation de ce contour dans l'image, et le contour résultant est directement inséré à sa position dans l'image.

Cette méthode est par exemple décrite dans l'article : Xin Li, Michael T. Orchard : New edge directed interpolation ; IEEE Trans. On Image Processing, Vol. 10, No. 10, pp. 1521-1527, 2001.

Un post-filtrage peut en outre être effectué pour rectifier les artefacts ayant pu apparaître à l'issue de la transformation de l'image.

Cependant, si le traitement des contours utilisée peut réduire certains artefacts apparus lors de la transformation de l'image, par exemple l'apparition de halos au niveau des contours de l'image, elle peut aggraver d'autres phénomènes, comme l'apparition d'oscillations (« ringing », en langue anglaise) qui peuvent être particulièrement gênantes pour certaines applications.

Un but de l'invention est de pouvoir obtenir une image ayant des zones de contour nettes, quelle que soit l'application choisie par l'utilisateur, sans effectuer de post-filtrage supplémentaire.

Un autre but de l'invention est de traiter l'image dans son ensemble de façon optimale pour l'application choisie par l'utilisateur.

A cet effet, l'invention propose un procédé de traitement d'une image numérique initiale comportant au moins une zone de contour, ledit procédé comprenant une phase de transformation, par exemple d'agrandissement de l'image initiale en une image numérique transformée, par exemple agrandie.

La transformation de chaque zone de contour est effectué avec un procédé d'agrandissement, par exemple une méthode ou un algorithme de transformation, choisi en fonction de la taille de la zone de contour parmi un ensemble de procédés d'agrandissement prédéterminés.

Plus particulièrement, il est proposé un procédé de traitement d'une image numérique initiale comportant des zones de contour, ledit procédé comprenant une phase de transformation de l'image initiale en une image numérique agrandie.

Ainsi, on peut décider, en fonction de la taille du contour, d'appliquer à ce contour un procédé de transformation identique à celui appliqué sur le reste de l'image. On peut également décider d'appliquer à ce contour un procédé de transformation différent de celui appliqué sur le reste de l'image.

Par ailleurs, on peut également choisir un outil logiciel de transformation, parmi un ensemble d'outils logiciels prédéterminés, pour appliquer un traitement de transformation, par exemple d'agrandissement, sur une zone de l'image autre qu'une zone de contour.

Le choix est aussi effectué en fonction de la taille, par exemple en nombre de pixels, de ladite zone d'image.

La taille peut aussi varier selon la dimension considérée de l'image multidimensionnelle.

Ainsi une zone d'image différente d'une zone de contour sera assimilée à une zone de contour « négatif ».

L'invention s'applique également à une image exempte de zone de contour. Dans ce cas l'ensemble de l'image sera néanmoins assimilé à une unique zone de contour « négatif ».

Selon un autre aspect de l'invention il est ainsi proposé un procédé de traitement d'une image, comprenant une détection de la taille des zones de cette image, par exemple une ou plusieurs zones de contour et une ou plusieurs zones de non-contour ou de contour « négatif » (pouvant correspondre à l'image dans son ensemble, si celle-ci ne comporte pas de zone de contour), et une transformation de l'image par application d'un outil ou de plusieurs outils de transformation choisis, en fonction de la taille de l'image ou des tailles respectives des différentes zones, parmi un ensemble d'outils prédéterminés.

Il est également proposé un dispositif de traitement d'une image, comprenant des moyens de détection aptes effectuer une détection de la taille de zones de cette image, par exemple une ou plusieurs zones de contour et une ou plusieurs zones de non-contour ou de contour « négatif » (pouvant correspondre à l'image dans son ensemble, si celle-ci ne comporte pas de zone de contour), et des moyens de transformation aptes à effectuer une transformation de l'image par application d'un outil ou de plusieurs outils de transformation sélectionnés, en fonction de la taille de l'image ou des tailles respectives des différentes zones, parmi un ensemble d'outils prédéterminés.

La phase d'agrandissement comporte une étape de détection où on détecte les zones de contours de l'image numérique initiale, une étape de détermination où on détermine la taille, en nombre de pixels, de chaque zone de contour, et une étape d'agrandissement de chaque zone de contour à l'aide d'un outil logiciel, choisi en fonction de la taille de chaque zone de contour, parmi un ensemble d'outils logiciels d'agrandissement.

De préférence, l'outil logiciel choisi pour l'étape d'agrandissement des contours comprend un traitement de netteté de la zone de contours, comportant une conversion des informations de niveau de pixels de la zone de contour en des informations principales initiales, comprises entre une valeur minimale, par exemple 0, et une valeur principale fonction de l'amplitude du contour, un sous-traitement de netteté effectué sur ces informations principales initiales de façon à obtenir des informations principales finales, et une conversion des informations principales finales en des informations finales de niveaux.

Selon un mode de réalisation, la valeur principale correspond à l'amplitude du contour, c'est-à-dire à l'écart entre l'amplitude maximale d'un pixel et l'amplitude minimale d'un autre pixel.

Ce mode de réalisation a pour avantage de limiter le nombre d'opérations à effectuer.

De préférence, l'information principale est normalisée, et correspond à l'amplitude du contour divisée par cette même amplitude. L'information principale a donc une valeur unitaire.

De préférence ledit procédé peut comprendre une étape de post-filtrage des zones de contours de l'image agrandie, selon un outil logiciel de post-filtrage, choisi en fonction des dimensions de chaque zone de contour.

En outre, on peut détecter le sens de variation des pixels de chaque zone de contour, et choisir l'outil logiciel de post-filtrage également en fonction dudit sens de variation.

De même, on peut choisir l'outil logiciel d'agrandissement également en fonction dudit sens de variation.

On peut déterminer la taille des zones de contours selon n dimensions.

En particulier on peut déterminer la taille des zones de contours selon deux dimensions, respectivement selon l'axe horizontal et l'axe vertical.

Le procédé peut comprendre également une étape d'affichage de l'image numérique agrandie sur un écran, en particulier un écran Plasma.

Selon un autre aspect de l'invention, il est proposé un dispositif de traitement d'une image numérique initiale comportant au moins une zone de contour, ledit dispositif comprenant des moyens de transformation, par exemple d'agrandissement aptes à transformer l'image initiale en une image numérique transformée, par exemple agrandie.

Lesdits moyens de transformation sont aptes à agrandir chaque zone de contour selon un procédé d'agrandissement, par exemple une méthode ou un algorithme d'agrandissement, choisi en fonction de la taille de la zone de contour parmi un ensemble de procédés d'agrandissement prédéterminés.

Plus particulièrement, les moyens d'agrandissement comportent des moyens de détection aptes à détecter les zones de contours de l'image numérique initiale, des moyens de détermination aptes à déterminer la taille, en nombre de pixels, de chaque zone de contour, et des moyens d'agrandissement aptes à agrandir chaque zone de contour à l'aide d'un outil logiciel, choisi en fonction de la taille de chaque zone de contour, parmi un ensemble d'outils logiciels d'agrandissement.

De préférence, les moyens d'agrandissement comprennent des moyens de traitement de netteté qui comportent des premiers moyens de conversion aptes à convertir des informations de niveau de pixels de la zone de contour en des informations principales initiales, comprises entre 0 et 1, des moyens de sous-traitement de netteté aptes à effectuer un traitement de netteté sur ces informations principales initiales de façon à obtenir des informations principales finales, et des deuxièmes moyens de conversion aptes à convertir les informations principales finales en des informations finales de niveaux.

Selon un autre aspect de l'invention, il est proposé un système d'affichage, en particulier un écran plasma, comprenant un dispositif tel que défini ci-avant.

D'autres avantages et caractéristiques de l'invention apparaîtront à l'examen de la description détaillée d'un mode de réalisation de l'invention nullement limitatif et des dessins annexés, sur lesquels :

- la figure 1 représente un mode de réalisation d'un écran selon l'invention ;
- la figure 2 représente un mode de réalisation d'un moyen de traitement selon l'invention ;
- la figure 3 représente un mode de réalisation d'une table en deux dimensions utilisée par le mode de réalisation du moyen de traitement de la figure 2 ;
- la figure 4 représente un autre mode de réalisation d'une table utilisée par le mode de réalisation des moyens de traitement,
- la figure 5 représente un autre mode de réalisation des moyens de traitement selon l'invention ,
- la figure 6 représente un mode de réalisation d'une autre table en deux dimensions utilisée par les moyens de traitement du mode de réalisation représenté sur la figure 5,
- la figure 7 illustre un mode de mise en oeuvre d'un procédé préféré de traitement des contours selon l'invention,
- les figures 8 et 9 illustrent une application numérique du mode de mise en oeuvre de la figure 7,
- la figure 10 illustre un autre mode de mise en oeuvre d'un procédé selon l'invention,
- les figures 11 et 12 illustrent une application numérique du mode de mise en oeuvre de la figure 10,
- la figure 13 illustre plus précisément un mode de réalisation des moyens de traitements des contours selon l'invention.

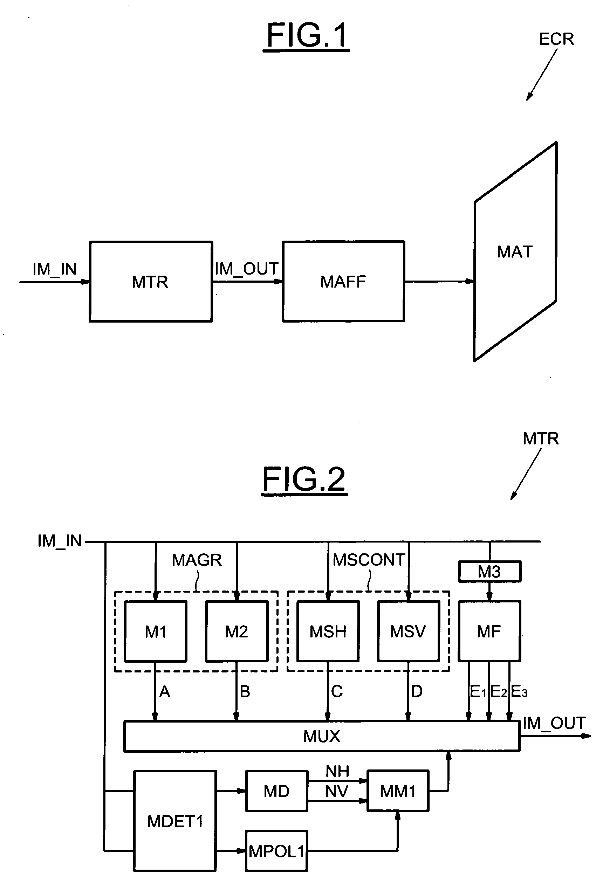

On se réfère à la figure 1 où la référence ECR représente un écran, par exemple un écran plasma.

Cet écran ECR comprend des moyens de traitement MTR d'une image d'entrée numérique IM-IN échantillonnée, et délivre en sortie une image numérique traitée IM-OUT.

Cette image traitée IM-OUT est délivrée à des moyens d'affichage MAFF aptes à adapter l'image pour l'afficher sur la matrice d'affichage MAT de l'écran ECR.

On se réfère à présent à la figure 2 qui illustre un mode de réalisation des moyens de traitement MTR.

Les moyens de traitement MTR comprennent dans cet exemple, des moyens d'agrandissement MAGR aptes à effectuer un agrandissement de l'image numérique d'entrée IM-IN.

Cependant il est possible d'effectuer tout autre traitement classique de l'image tels qu'une augmentation de sa résolution, ou encore l'application d'un filtre de type poly-phase.

Les moyens d'agrandissement MAGR reçoivent en entrée l'image d'entrée IM-IN et délivrent en sortie une image d'entrée agrandie.

Dans cet exemple, l'image d'entrée IM-IN peut être agrandie au choix, selon deux algorithmes d'agrandissement différents M1 et M2 qui délivrent chacun une image agrandie respectivement A et B selon deux méthodes ou algorithmes différents.

Par exemple, les algorithmes d'agrandissement peuvent être un algorithme de type bi-linéaire ou encore un algorithme d'interpolation par morceaux (« spleen interpolation », en langue anglaise).

Bien entendu, l'homme du métier pourra utiliser toute autre algorithme ou méthode d'agrandissement. L'image d'entrée numérique IM-IN peut donc être agrandie selon autant de méthodes choisies par l'utilisateur.

Les moyens de traitement MTR comprennent également des moyens de traitement des contours MSCONT.

Ces moyens de traitement comprennent des moyens de traitement des contours horizontaux MSH et des moyens de traitement des contours verticaux MSV.

Chacun des contours horizontaux et verticaux peuvent être synthétisés par des méthodes classiques, par exemple ceux décrits dans l'article : Xin Li, Michael T. Orchard : New edge directed interpolation ; IEEE Trans. On Image Processing, Vol. 10, No. 10, pp. 1521-1527, 2001.

Cependant, bien qu'il soit possible d'utiliser toute méthode connue d'agrandissement des contours, par exemple celle décrite dans l'article précité, il est préférable d'utiliser la méthode décrite dans la demande de brevet déposée le même jour que la présente demande de brevet au nom de STMicroelectronics SA, et intitulée « Procédé de traitement d'une image numérique, en particulier le traitement des zones de contour, et dispositif correspondant », et qui sera décrit plus en détail ci-après.

Les moyens de traitement MTR peuvent également comprendre des moyens de filtrage MF aptes à filtrer une image préalablement agrandie par des moyens M3, à l'aide par exemple d'un algorithme de répétition de pixels.

A titre d'exemple, les moyens de filtrage MF peuvent être un filtre de type diamant utilisé pour lisser l'image agrandie, de façon à atténuer les discontinuités engendrées par un échantillonnage classiquement effectué en amont de l'étape d'agrandissement de l'image.

Selon le facteur d'agrandissement ou la taille du contour détecté comme on le verra ci-après, il est préférable d'utiliser un filtre diamant ayant une dimension adaptée.

Par exemple, le filtre diamant peut être de dimension 3, et être alors de la forme :

$$\begin{pmatrix} 0 1 0 \\ 1 1 1 \\ 0 1 0 \end{pmatrix} / 5$$

de dimension 5, et être alors de la forme :

$$\begin{pmatrix} 0 0 1 0 0 \\ 0 1 1 1 0 \\ 1 1 1 1 1 \\ 0 1 1 1 0 \\ 0 0 1 0 0 \end{pmatrix} / 13$$

ou encore de dimension 7 et être alors de la forme :

$$\begin{pmatrix} 0001000 \\ 0011100 \\ 0111110 \\ 1111111 \\ 0111110 \\ 0011100 \\ 0001000 \end{pmatrix} /25$$

Par conséquent, les moyens de filtrage MF peuvent délivrer trois images E1, E2 et E3, agrandies par répétition de pixels par les moyens M3 et filtrées un filtre de type diamant, respectivement de dimension 3, 5 ou 7.

Par ailleurs, les moyens de traitement MTR comprennent des moyens de détection MDET1 aptes à détecter les minima et maxima locaux dans l'image initiale IM-IN dans chaque dimension considérée de l'image. Par exemple, pour une image en deux dimensions, les moyens de détection MDET1 détectent les minimum et maximum locaux dans le sens horizontal et vertical de l'image, c'est-à-dire pour chaque ligne et pour chaque colonne de l'image numérique.

Les moyens MDET1 peuvent mettre en oeuvre un algorithme ou une méthode de détection de minimum et de maximum classique, par exemple celle décrite sur le site : « http://fr.wikipedia.org/wiki/Extremum_local ».

Plus généralement, il est possible de détecter ces minima et maxima locaux dans n dimensions, que ce soit spatial ou temporel.

Les minima et maxima locaux détectés sont délivrés à des moyens de détermination MD aptes à déterminer, pour chaque dimension ici horizontale et verticale, de l'image initiale IM-IN, la taille du contour respectivement NH pour la dimension horizontale et NV pour la dimension verticale. En d'autres termes, les moyens de calcul comptent le nombre de pixels à l'intérieur du contour considéré.

Par conséquent, les moyens de détermination MD délivrent pour chaque pixel de l'image et pour chaque dimension, le nombre de pixels du contour auquel appartient ledit pixel considéré.

Les valeurs sont délivrées à des moyens de mémorisation MM1 aptes à mémoriser une table en n dimensions (ici n=2) où sont stockés les algorithmes pouvant être utilisés pour générer les pixels de l'image de sortie IM-OUT, optimal pour la largeur du contour horizontalement d'une part et verticalement d'autre part.

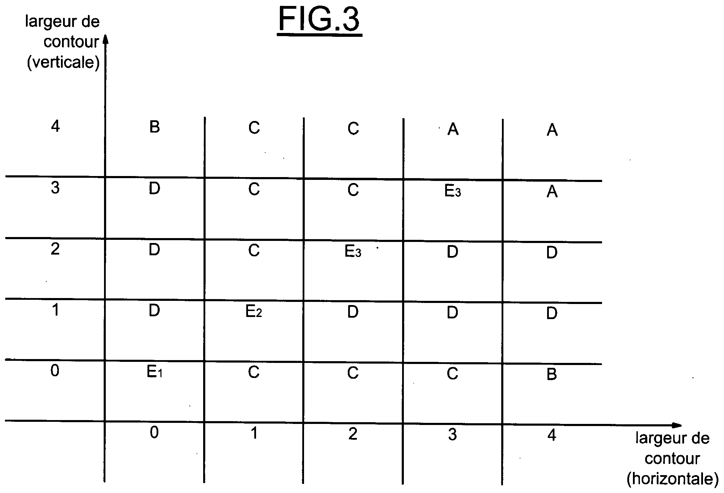

Un exemple de cette table est représenté sur la figure 3.

Sur celle-ci, on a représenté deux axes horizontal et vertical avec le nombre de pixels que peut comprendre le contour dans chacune des dimensions.

Dans cet exemple, on a choisi de limiter la taille du contour à quatre pixels. Par conséquent, tout contour comprenant plus de quatre pixels, sera assimilé à un contour de quatre pixels.

Cependant, il est possible de faire varier la taille du contour maximal mémorisé par la table (et donc la taille de la table mémorisée) en fonction des besoins de l'utilisateur.

En fonction du nombre de pixels compris dans le contour horizontalement et verticalement, les moyens de mémorisation MM1 délivrent le type d'algorithme à utiliser pour générer les pixels de l'image de sortie correspondant aux pixels de l'image initiale.

Par exemple, si un pixel appartient à un contour horizontal comprenant trois pixels, et à un contour vertical comprenant deux pixels, les pixels de l'image de sortie générés à partir de ce pixel de l'image d'entrée le sont à partir des moyens de traitement des contours verticaux MSV.

On se rapporte à nouveau à la figure 2.

Les moyens traitement MTR comprennent des moyens de sélection MUX (par exemple un multiplexeur) commandés par les données de sortie des moyens de mémorisation MM1, et ayant autant d'entrée que d'algorithmes de traitement utilisés, ici sept.

Les moyens de sélection délivrent alors les pixels de l'image de sortie générés selon la méthode optimale mémorisée dans les moyens MM1.

Les moyens de traitement MTR peuvent également comprendre des moyens de polarisation MPOL1 aptes à détecter la polarité d'un contour, c'est-à-dire si le contour est montant, où l'on passe d'un pixel ayant une amplitude minimale locale à un pixel ayant une amplitude maximale locale, ou descendant, où l'on passe d'un pixel ayant une amplitude maximale locale à un pixel ayant une amplitude minimale locale.

Cette information est délivrée aux moyens de mémorisation MM1.

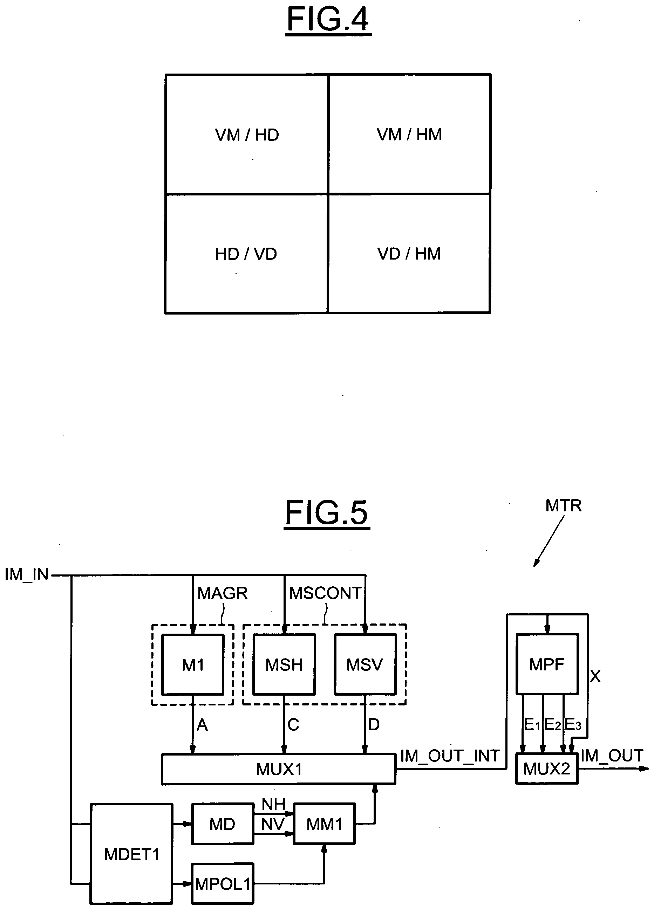

Dans ce cas, ces derniers mémorisent une table de la forme de celle représentée sur la figure 4.

Cette table comporte quatre cadrans de façon à tenir compte d'une information supplémentaire, c'est-à-dire si le pixel appartient à un contour montant ou à un contour descendant, et cela pour les dimensions horizontale et verticale.

Par conséquent, la table représentée sur la figure 3 est répétée pour chaque cadran de la table de la figure 4 et les données sont adaptées à la polarité du contour détecté par les moyens MPOL1.

Autrement dit, l'algorithme sélectionné pourra être différent si l'on considère un contour montant ou descendant.

On se rapporte à présent à la figure 5, qui illustre un autre mode de réalisation des moyens de traitement MTR.

Dans ce mode de réalisation, les moyens d'agrandissement MAGR ne comportent ici qu'un seul moyen M1 apte à agrandir l'image d'entrée IM-IN selon un algorithme donné. Ils délivrent en sortie une image agrandie B.

De même que pour le mode de réalisation de la figure 2, il est possible de choisir un algorithme d'agrandissement parmi un ensemble d'algorithmes.

De même que pour la mode de réalisation de la figure 2, l'image agrandie B, et les images de contour horizontaux et verticaux C et D sont délivrés à des moyens de sélection, ici un multiplexeur MUX 1 qui délivre en sortie une image de sortie intermédiaire IM-OUT-INT.

Cette dernière est délivrée à des moyens de post-filtrage MPF aptes à effectuer un filtrage selon différents filtres, par exemple les trois filtres diamants décrits ci-avant.

Par conséquent, les moyens de post-filtrage MPF délivrent trois images filtrées E1, E2 et E3 à des deuxièmes moyens de sélection, par exemple un multiplexeur MUX 2, commandé également par les moyens de mémorisation MM.

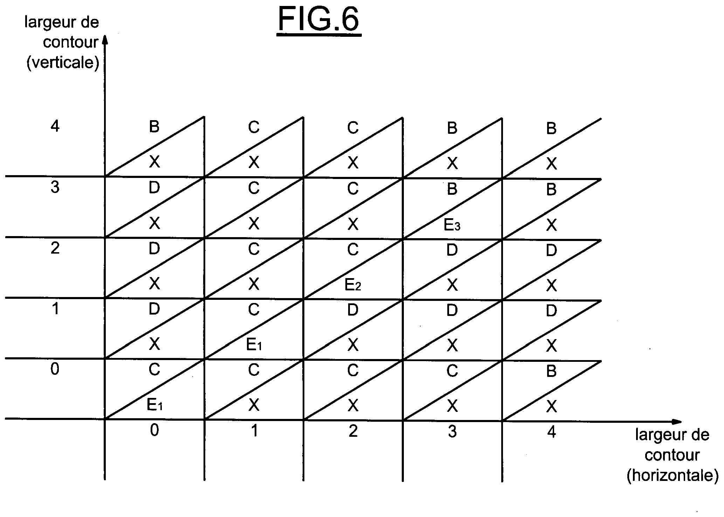

Dans ce cas, les moyens de mémorisation MM1 comprennent une table de la forme de celle représentée sur la figure 6.

Celle-ci comprend des informations aptes à commander chacun des multiplexeurs MUX 1 et MUX 2.

En d'autres termes, on peut effectuer le post-filtrage également en fonction de la taille des contours dans le sens horizontal et vertical. Dans cet exemple, le post-filtrage est réalisé, pour certaines tailles de contour, selon les données délivrées par la table mémorisée par les moyens MM1.

En dehors de ces tailles, les moyens de post-filtrage MPF délivre directement l'image IM-OUT-IN, référencée X.

On se réfère à nouveau à la figure 5.

De même que pour le mode de réalisation de la figure 2, les moyens de traitement MTR peuvent comprendre ici des moyens MPOL1 aptes à détecter le sens de variation du contour, montant ou descendant.

Les moyens de sélection MUX 2 délivrent en sortie l'image de sortie IM-OUT.

Que ce soit les moyens de traitement selon le mode de réalisation de la figure 2 ou de la figure 5, plusieurs modes opératoires sont possibles. Par exemple, il est possible de calculer ensemble des images agrandies A, B, C, D, E1, E2, et E3, puis de délivrer les pixels choisis en fonction de la table mémorisée dans les moyens de mémorisation MM1 en sortie.

En variante, il n'est possible de déterminer les pixels de l'image agrandie selon un algorithme qu'une fois la sélection de celui-ci effectuée par les moyens de mémorisation MM1. En d'autres termes, on ne génère les pixels avec un algorithme donné seulement si celui-ci est sélectionné par les moyens de mémorisation MM1.

On va maintenant décrire plus précisément un mode préféré de traitement des contours horizontaux et verticaux tel que décrit dans la demande de brevet précitée intitulée : « Procédé de traitement d'une image numérique, en particulier le traitement des zones de contour, et dispositif correspondant ».

Cette autre demande est à toutes fins utiles, incorporée du contenu de la présente demande.

Dans la suite de la description, sauf indication contraire, on considère que les informations principales qui seront évoquées ci-après, sont normalisées c'est-à-dire comprises entre 0 et 1.

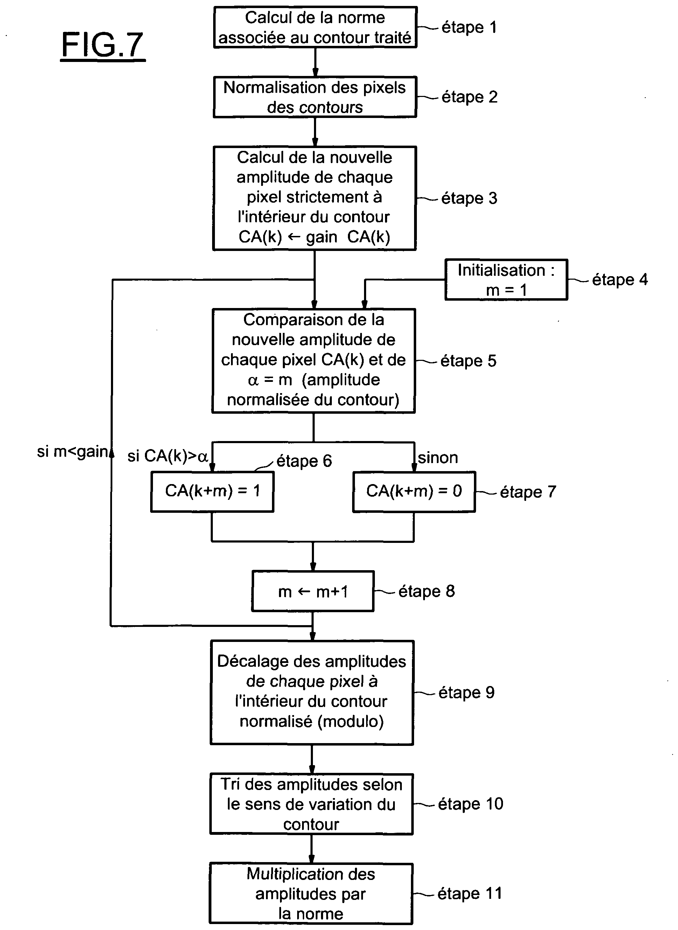

A cet effet, on se réfère à la figure 7 qui illustre un mode de mise en oeuvre du procédé selon l'invention dans le cas particulier où l'on effectue un agrandissement d'une image numérique, ou encore lorsque l'on augmente la résolution de l'image. L'agrandissement peut être effectué avec un facteur d'amplification (ou gain) entier ou non entier.

Préalablement, on a détecté pour chaque dimension de l'image les contours de celle-ci.

Une première étape (étape 1) consiste à calculer la norme associée au contour traité dans la dimension choisie. La norme doit être recalculée pour chaque contour traité.

Celle-ci correspond à l'écart (valeur principale) entre les amplitudes maximale et minimale des pixels délimitant le contour. Cet écart est appelé amplitude du contour.

Au cours d'une deuxième étape (étape 2), on normalise les pixels des contours.

Cette opération revient pour chaque pixel du contour, à soustraire à l'amplitude dudit pixel, la valeur minimale du pixel limitant le contour, et de diviser le résultat par la norme calculée à l'étape 1.

Au cours d'une étape 3, on calcule la nouvelle amplitude de chaque pixel strictement à l'intérieur du contour, en multipliant son amplitude normalisée par le gain G de l'agrandissement.

Puis, de façon à obtenir des amplitudes pour les sous-pixels engendrées par l'agrandissement de l'image (ou de l'augmentation de la résolution), on compare (étape 5) la nouvelle amplitude de chaque pixel CA(k) (k prenant successivement la valeur de l'indice du pixel traité) avec un seuil $\alpha$ égal à l'amplitude du contour normalisé (c'est-à-dire 1, dans ce cas) multiplié par un indice m, celui-ci ayant été initialisé à 1 au cours d'une étape 4.

Si la nouvelle amplitude du pixel CA(k) est supérieure au seuil a, on affecte la valeur 1 au sous-pixel (étape 6), et 0 sinon (étape 7).

Dans le cas où l'on ne considère pas une amplitude normalisée, on affecte l'amplitude du contour, c'est-à-dire (CA(max)- CA(min)) à CA(k+m).

On incrémente la valeur de m (étape 8) et on répète les étapes 5 à 8 tant que m est strictement inférieur au gain.

Lors d'une étape 9, on décale l'amplitude de chaque pixel que l'on avait amplifiée au cours de l'étape 3, de façon que celle-ci se retrouve à l'intérieur de la plage normalisée (ici entre 0 et 1).

Cette opération revient à effectuer une opération de « modulo » sur l'amplitude CA(k), ce qui est possible du fait de la relation entre une amplitude normalisée et une phase.

Finalement, on trie les amplitudes obtenues pour l'ensemble des pixels du contour et des sous-pixels, en fonction du sens de variation de celui-ci (étape 10).

Enfin, on retrouve les amplitudes réelles de chaque pixel et sous-pixel en effectuant le processus inverse de l'étape 2.

Plus précisément, pour un contour montant, si CA(in) correspond à l'amplitude réelle d'un pixel à la position n à l'intérieur d'un contour, en effectuant l'opération de normalisation, il vient :

$$CA(n1) \leftarrow (CA(in) - CA(i1)) / \text{contour\_contrast}$$

avec contour_contrast= abs(CA(k1) - CA(i1)) et

avec n1 = (i1+1),...,(k1-1), n1 correspondant à la position d'un pixel à l'intérieur du contour considéré,
où,
i1 < k1, i1 et k1 étant deux entiers correspondent aux positions des pixels ayant respectivement une amplitude minimale et maximale et délimitant le contour,
CA(i1) désigne l'amplitude minimale du pixel délimitant le contour, d'indice i1,
CA(k1) désigne l'amplitude maximale du pixel délimitant le contour, d'indice k1,
La largeur du contour 1 est donc égale à:

$$l = (k1 - i1 - 1),$$

en nombre de pixels.

La nouvelle amplitude CA' du pixel d'indice n1 dans l'image initiale, est égale à :

$$CA'(n1*g) = gain*(CA(n1)-CA(i1));$$

où:

gain : facteur d'amplification,
g désigne la partie entière du gain,
n1*g désigne le nouvel indice dans l'image traitée du pixel d'indice n1 dans l'image initiale.

L'amplitude CA" des sous-pixels ajouté par le traitement d'image est déterminée par la relation :

$$CA''(n1*g+m) = \begin{cases} CA(k1) & \text{if } CA'(n1*g) >= m*(CA(k1)-CA(i1)) \\ CA(i1) & \text{if } CA'(n1*g) < m*(CA(k1)-CA(i1)) \end{cases}$$

avec m = 1, ..., (g-1).

On décale la nouvelle amplitude CA(n1) que l'on avait multiplié par le gain, de façon qu'elle soit comprise dans l'écart normalisé, c'est-à-dire que l'on applique une opération modulo, en terme de phase :

$$CA''(n1*g) = modulo\{ CA'(n1*g), (CA(k1) - CA(i1)) \} + CA(i1),$$

où

CA"(n1*g) désigne l'amplitude normalisée du pixel strictement à l'intérieur du contour, d'indice n*g.

Les amplitudes des contours sont triées dans l'ordre ascendant entre les valeurs minimales et maximales, de façon à obtenir pour chaque indice l'amplitude finale CAout :

$$CAout(n1*g+m0) = tri\{ CA"(n1*g+m0) \}asc$$

avec m0 = 0,1, ... , (g-1).

De même, pour un contour descendant, si CA(in) correspond à l'amplitude réelle d'un pixel à la position n à l'intérieur d'un contour, en effectuant l'opération de normalisation,il vient :

$$CA(n2) \leftarrow (CA(in)- CA(k2))/ contour\_contrast$$

avec contour_contrast= abs(CA(k2) - CA(i2)) et

avec n2 = (i2+1),...,(k2-1), n2 correspondant à la position d'un pixel à l'intérieur du contour considéré,
i2 < k2, i2 et k2 étant deux entiers correspondent aux positions des pixels ayant respectivement une amplitude maximale et minimale et délimitant le contour,
CA(k2) désigne l'amplitude minimale du pixel délimitant le contour, d'indice i1,
CA(i2) désigne l' amplitude maximale du pixel délimitant le contour, d'indice k1.

La largeur du contour 1 est donc égale à:

$$l = (k2 - i2 - 1),$$

en nombre de pixels.

La nouvelle amplitude CA' du pixel d'indice n1 dans l'image initiale, est égale à :

$$CA'(n2*g) = gain*(CA(n2)-CA(k2));$$

où :

gain désigne le facteur d'amplification,
g désigne la partie entière du gain,
n2*g désigne le nouvel indice dans l'image traitée du pixel d'indice n2 dans l'image initiale.

L'amplitude CA" des sous-pixels ajouté par le traitement d'image est déterminée par la relation :

$$CA"(n2*g+m) = \begin{cases} CA(k2) & \text{if } CA'(n2*g) >= m*(CA(i2)-CA(k2)) \\ CA(i2) & \text{if } CA'(n2*g) < m*(CA(i2)-CA(k2)) \end{cases}$$

avec m = 1, ..., (g-1).

On décale la nouvelle amplitude CA(n2) de façon qu'elle soit comprise dans l'écart normalisé, c'est-à-dire que l'on applique une opération modulo, en terme de phase :

$$CA"(n2*g) = modulo\{ CA'(n2*g) , (CA(i2) - CA(k2)) \} + CA(k2),$$

où

CA"(n2*g) désigne l'amplitude normalisée du pixel strictement à l'intérieur du contour, d'indice n*g.

Les amplitudes des contours sont triées dans l'ordre ascendant entre les valeurs minimales et maximales, de façon à obtenir pour chaque indice l'amplitude finale CAout :

$$CAout(n2*g+m0) = tri\{ CA"(n2*g+m0) \}des$$

avec m0 = 0,1, ... , (g-1 ).

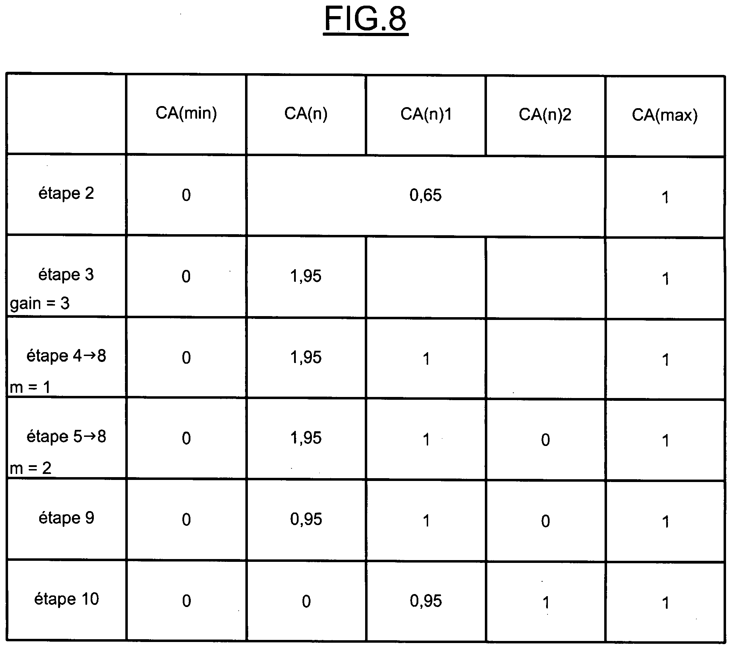

On se réfère à présent à la figure 8 qui illustre un exemple numérique du mode de réalisation décrit à la figure 7.

Dans cet exemple, on a opéré un agrandissement de l'image par un gain égal à 3. L'intérieur strict de la zone de contour comprend ici un seul pixel, et deux sous-pixels vont être générés par l'agrandissement.

A l'issue de la normalisation, on se retrouve à l'étape 2 où les amplitudes CA(min), CA(n) et CA(max) sont respectivement les valeurs de 0 ; 0,65 et 1.

Pour l'étape 3, on multiplie l'amplitude CA(n) par le gain, c'est-à-dire 3. Sa nouvelle valeur est égale à 1,95.

Puis on procède à l'étape 5 où la valeur de m est égale à 1.Comme 1,95 est supérieur à 1, on affecte à l'amplitude CA(n)1 du premier sous-pixel, la valeur de 1.

Puis on répète la même opération avec la valeur de m=2. Comme 1,95 est inférieur à 2, on affecte à l'amplitude CA(n)2 du deuxième sous-pixel la valeur de 0.

Lors de la neuvième étape, on effectue l'opération de Modulo où l'on retranche la valeur 1, c'est-à-dire l'écart entre CA(max) et CA(min), de l'amplitude CA(n) du pixel de contour, de façon que son amplitude soit comprise entre 0 et 1.

Finalement, lors de l'étape 10, on trie l'ensemble des amplitudes normalisées obtenues, ici dans un ordre croissant.

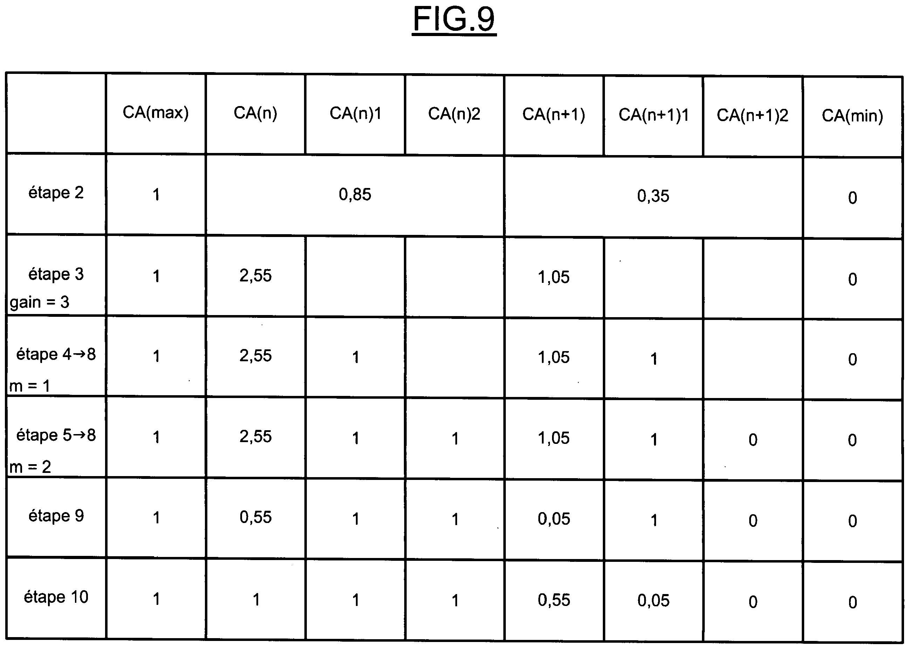

La figure 9, illustre exactement le même type de traitement, c'est-à-dire un agrandissement d'un facteur 3, mais dans le cas où initialement, le contour comprend deux pixels intermédiaires, ayant ici une amplitude normalisée respectivement de 0,85 pour CA(n) et de 0,35 pour CA(n+1).

Deux sous-pixels sont ajoutés par pixels strictement à l'intérieur de la zone de contour, c'est-à-dire 4 sous-pixels en tout dans cet exemple.

Par ailleurs, on considère ici un contour décroissant.

Les étapes 2 à 9 sont identiques à celles décrites à la figure 7, mais répétées pour chacun des pixels de la zone de contour CA(n) et CA(n+1).

Par conséquent, l'étape 10 de tri s'effectue sur l'ensemble des amplitudes obtenues, ici six pixels, et dans l'ordre décroissant, étant donné que l'on considère ici un contour descendant.

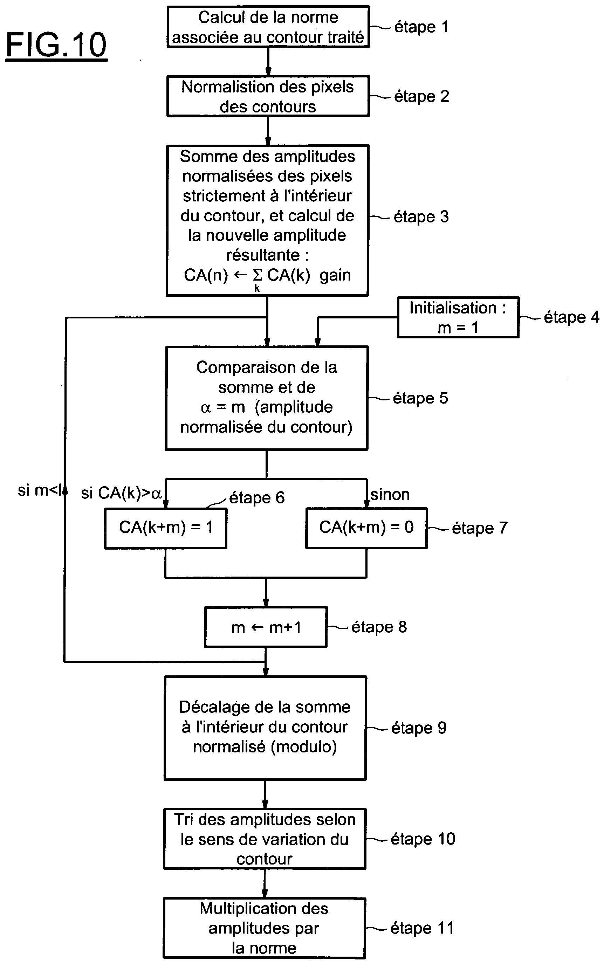

On se rapporte à présent à la figure 10, qui illustre un autre mode de mise en oeuvre d'un procédé selon l'invention, particulièrement adapté dans le cas d'une augmentation, d'une réduction ou encore d'un changement de résolution de l'image.

Dans ce mode de réalisation, au cours de l'étape 3, on ne considère non pas chaque amplitude normalisée des pixels situés strictement à l'intérieur de la zone de contour, mais on opère sur la somme de ces amplitudes normalisées.

Par conséquent la comparaison de l'étape 5 s'effectue avec cette somme.

En outre, le critère d'arrêt à l'issue de l'étape 8 est non pas la comparaison entre l'indice m et le gain mais entre l'indice m et la variable 1, qui correspond au nombre de pixels strictement à l'intérieur du contour à l'issue du traitement.

Par ailleurs, l'opération modulo de l'étape 9 s'effectue sur la somme calculée lors de l'étape 3.

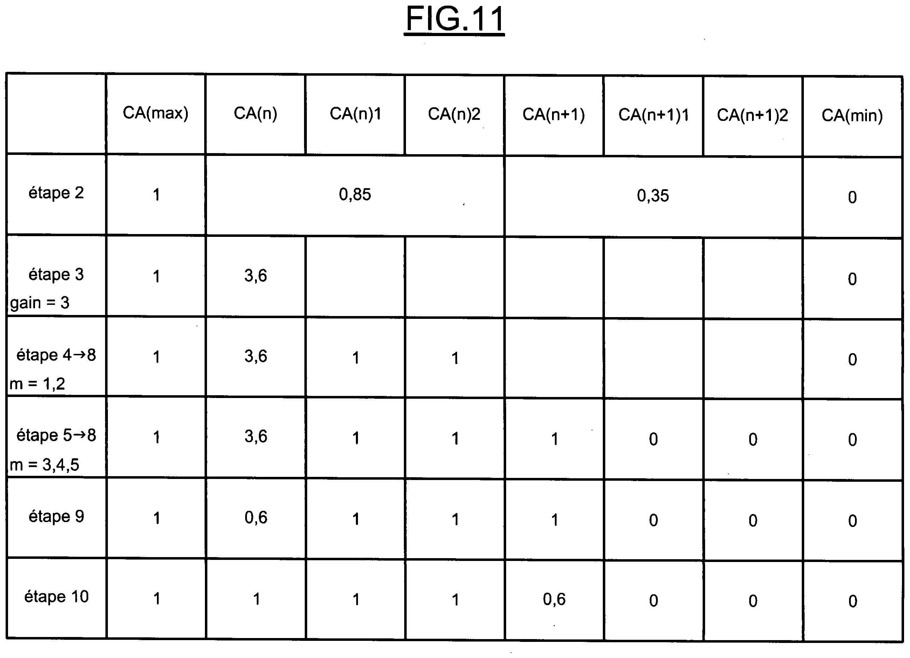

On se réfère à présent à la figure 11 qui donne un exemple numérique du mode de réalisation représenté sur la figure 10.

On considère ici un contour descendant avec deux pixels intermédiaires ayant respectivement pour amplitudes normalisées 0,85 pour CA(n) et 0,35 pour CA(n+1).

Le traitement réalisé ici est de nouveau un agrandissement avec un gain de 3, 4 sous-pixels sont donc générés pour le contour, en plus des deux pixels intermédiaires initiaux.

Par conséquent, au cours de l'étape 3, on affecte comme nouvelle amplitude au pixel CA(n), la somme des amplitudes égale à 0,85 et 0,35, le tout multiplié par le gain de 3. L'amplitude résultante est alors égale à 3,6. Puis, comme déjà réalisé auparavant, on effectue les étapes 4 à 8 tant que l'indice m est strictement inférieur au nombre de pixels 1 à l'intérieur de la zone de contour.

Au cours de l'étape 9, on effectue l'opération de Modulo sur l'amplitude calculée lors de l'étape 3, de façon que celle-ci soit de nouveau normalisée, c'est-à-dire égale à 0,6 dans ce cas.

Finalement, on effectue au cours de l'étape 10 le tri de l'ensemble des valeurs obtenues.

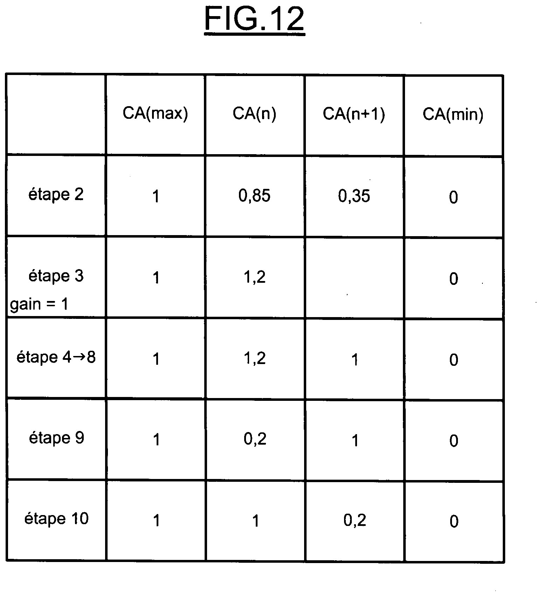

On se réfère à présent à la figure 12 qui illustre un exemple numérique du mode de réalisation de la figure 10, dans le cas particulier où le gain est égal à 1.

Cet exemple correspond à un traitement de l'image où l'on ne change ni le format ni la résolution de celle-ci.

Par exemple, le traitement peut être celui des effets de flou d'une image numérique.

Cet exemple numérique correspond à un contour descendant comprenant deux pixels intermédiaires CA(n) et CA(n+1) ayant respectivement comme amplitudes normalisées les valeurs de 0,85 et 0,35.

A l'issue de l'étape 3, l'amplitude affectée à CA(n) est égale à 1,2, c'est-à-dire la somme des amplitudes normalisées de CA(n) et CA(n+1) à l'étape 2.

La comparaison effectuée au cours des étapes 4 à 8 permet d'affecter la valeur de 1 aux pixels ayant comme amplitude CA(n+1).

Les étapes 9 et 10 s'effectuent de la même manière que décrit précédemment.

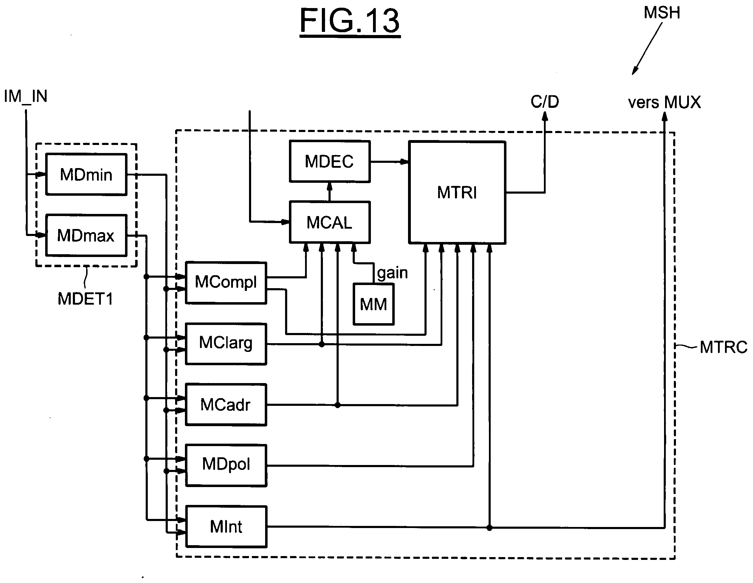

On se réfère à présent à la figure 13.

Les moyens de traitement des contours MTRC (correspondant à MTH ou MTV) comprennent un premier bloc MCampl apte à calculer l'amplitude du contour considéré à partir des amplitudes minimale et maximale locales détectées par les moyens MDET.

Des moyens MClarg sont aptes quant à eux à calculer la taille ou largeur du contour, c'est-à-dire le nombre de pixels intermédiaires à l'intérieur de ce contour.

Des moyens d'adressage MCadr mémorisent pour chaque contour sa localisation au sein de l'image d'entrée IM-IN-ech.

Enfin, des moyens MDpol sont aptes à détecter la polarité du contour, c'est-à-dire si le contour varie d'une amplitude minimale à une amplitude maximale (contour montant) ou une amplitude maximale à une amplitude minimale (contour descendant).

Les moyens de traitement des contours MCTR comprennent également des moyens de mémorisation MM aptes à mémoriser la valeur du gain d'amplification gain. Des moyens de calcul MCAL mettent en oeuvre, à partir des données délivrées par les moyens MCampl, MClarg, MCadr et du gain d'amplification gain, un mode de mise en oeuvre du procédé selon l'invention, par exemple les étapes 4 à 8 des exemples illustrés sur les figures 4 ou 8.

Les nouvelles amplitudes normalisées sont délivrées à des moyens de décalage MDEC aptes à effectuer les opérations de modulo des amplitudes de pixels de contours (étape 6 de la figure 5). L'ensemble des amplitudes des pixels du contour sont délivrés à des moyens de tri MTRI qui les classent en fonction des données délivrées par les moyens MDpol, c'est-à-dire si le contour est montant ou descendant.

Les moyens de tri MTRI déterminent également les amplitudes finales en inversant l'opération de normalisation.

Les moyens de traitement des contours peuvent comprendre également des moyens d'interpolation MInt apte à contrôler l'insertion des contours dans le cas où le traitement effectué par les moyens MTR comprend l'application d'un gain non entier.

## Revendications

1. Procédé, mis en oeuvre par ordinateur, de traitement d'une image numérique initiale comportant des zones de contour, ledit procédé comprenant une phase d'agrandissement de l'image initiale en une image numérique agrandie, **caractérisé par le fait que** la phase d'agrandissement comporte une étape de détection où on détecte les zones de contours de l'image numérique initiale, une étape de détermination où on détermine la taille, en nombre de pixels, de chaque zone de contour, et une étape d'agrandissement de chaque zone de contour à l'aide d'un outil logiciel, choisi en fonction de la taille de chaque zone de contour, parmi un ensemble d'outils logiciels d'agrandissement.

2. Procédé selon la revendication 1, dans lequel l'outil logiciel choisi pour l'étape d'agrandissement des contours comprend un traitement de netteté de la zone de contours, qui comporte une conversion des informations de niveau de pixels de la zone de contour en des informations principales initiales (étape 2), comprises entre une valeur minimale, et une valeur principale fonction de l'amplitude du contour, un sous-traitement de netteté effectué sur ces informations principales initiales de façon à obtenir des informations principales finales (étapes 3 à 10), et une conversion des informations principales finales en des informations finales de niveaux (étape 11).

3. Procédé selon l'une des revendications précédentes, comprenant une étape de post-filtrage des zones de contours de l'image agrandie, selon un outil logiciel de post-filtrage, choisi en fonction des dimensions de chaque zone de contour.

4. Procédé selon la revendication 3, dans lequel on détecte le sens de variation des pixels de chaque zone de contour, et on choisi l'outil logiciel de post-filtrage également en fonction dudit sens de variation.

5. Procédé selon l'une des revendications précédentes, dans lequel on détecte le sens de variation des pixels de chaque zone de contour, et on choisi l'outil logiciel d'agrandissement également en fonction dudit sens de variation.

**6.** Procédé selon l'une des revendications précédentes, dans lequel on détermine la taille des zones de contours selon n dimensions.

**7.** Procédé selon l'une des revendications précédentes, dans lequel on détermine la taille des zones de contours selon deux dimensions, respectivement selon l'axe horizontal et l'axe vertical.

**8.** Procédé selon l'une des revendications précédentes, comprenant en outre une étape d'affichage de l'image numérique agrandie sur un écran, en particulier un écran Plasma.

**9.** Dispositif de traitement d'une image numérique initiale comportant au moins une zone de contour, ledit dispositif comprenant des moyens d'agrandissement (MAGR) aptes à agrandir l'image initiale en une image numérique agrandie, **caractérisé par le fait que** les moyens d'agrandissement comportent des moyens de détection aptes à détecter les zones de contours de l'image numérique initiale, des moyens de détermination (MD) aptes à déterminer la taille, en nombre de pixels, de chaque zone de contour, et des moyens d'agrandissement aptes à agrandir chaque zone de contour à l'aide d'un outil logiciel, choisi en fonction de la taille de chaque zone de contour, parmi un ensemble d'outils logiciels d'agrandissement.

**10.** Dispositif selon la revendication précédente, dans lequel les moyens d'agrandissement comprennent des moyens de traitement de netteté qui comportent des premiers moyens de conversion (MCAL) aptes à convertir des informations de niveau de pixels de la zone de contour en des informations principales initiales, comprises entre une valeur minimale et une valeur principale fonction de l'amplitude du contour, des moyens de sous-traitement de netteté aptes à effectuer un traitement de netteté sur ces informations principales initiales de façon à obtenir des informations principales finales, et des deuxièmes moyens de conversion (MTRI) aptes à convertir les informations principales finales en des informations finales de niveaux.

**11.** Système d'affichage, en particulier un écran plasma, comprenant un dispositif selon l'une des revendications 9 à 10.

## Patentansprüche

**1.** Verfahren, welches von einem Computer durchgeführt wird, zur Verarbeitung eines anfänglichen digitalen Bildes, das Konturbereiche aufweist, wobei das Verfahren eine Phase der Vergrößerung des anfänglichen Bildes zu einem vergrößerten digitalen Bild umfasst, **dadurch gekennzeichnet, dass** die Phase der Vergrößerung einen Detektionsschritt, in dem die Bereiche von Konturen des anfänglichen digitalen Bildes detektiert werden, einen Bestimmungsschritt, in dem die Größe, als Anzahl von Pixeln, jedes Konturbereichs bestimmt wird, und einen Schritt der Vergrößerung jedes Konturbereichs mithilfe eines Software-Tools, das in Abhängigkeit von der Größe des jeweiligen Konturbereichs aus einer Menge von Software-Tools zur Vergrößerung gewählt wird, umfasst.

**2.** Verfahren nach Anspruch 1, wobei das für den Schritt der Vergrößerung der Konturen gewählte Software-Tool eine Schärfebearbeitung des Konturbereichs umfasst, welche eine Umwandlung der Pixelniveau-Informationen des Konturbereichs in anfängliche Hauptinformationen (Schritt 2), die zwischen einem minimalen Wert und einem von der Amplitude der Kontur abhängigen Hauptwert liegen, eine Schärfe-Unterbearbeitung, die an diesen anfänglichen Hauptinformationen durchgeführt wird, um endgültige Hauptinformation zu gewinnen (Schritte 3 bis 10), und eine Umwandlung der endgültigen Hauptinformation in endgültige Niveau-Informationen (Schritt 11) umfasst.

**3.** Verfahren nach einem der vorhergehenden Ansprüche, welches einen Schritt der Nachfilterung der Konturbereiche des vergrößerten Bildes gemäß einem Software-Tool zur Nachfilterung umfasst, das in Abhängigkeit von den Abmessungen des jeweiligen Konturbereichs gewählt wird.

**4.** Verfahren nach Anspruch 3, wobei die Änderungsrichtung der Pixel jedes Konturbereichs detektiert wird und das Software-Tool zur Nachfilterung auch in Abhängigkeit von dieser Änderungsrichtung gewählt wird.

**5.** Verfahren nach einem der vorhergehenden Ansprüche, wobei die Änderungsrichtung der Pixel jedes Konturbereichs detektiert wird und das Software-Tool zur Vergrößerung ebenfalls in Abhängigkeit von der Änderungsrichtung gewählt wird.

**6.** Verfahren nach einem der vorhergehenden Ansprüche, wobei der Größe der Konturbereiche in n Dimensionen bestimmt wird.

**7.** Verfahren nach einem der vorhergehenden Ansprüche, wobei der Größe der Konturbereiche in zwei Dimensionen bestimmt wird, entlang der horizontalen Achse bzw. der vertikalen Achse.

**8.** Verfahren nach einem der vorhergehenden Ansprüche, welches außerdem einen Schritt der Anzeige des vergrößerten digitalen Bildes auf einem Bildschirm, insbesondere einem Plasmabildschirm, umfasst.

**9.** Vorrichtung zur Verarbeitung eines anfänglichen digitalen Bildes, das wenigstens einen Konturbereich aufweist, wobei die Vorrichtung Vergrößerungsmittel (MAGR) umfasst, die in der Lage sind, das anfängliche Bild zu einem vergrößerten digitalen Bild zu vergrößern, **dadurch gekennzeichnet, dass** die Vergrößerungsmittel umfassen: Detektionsmittel, die in der Lage sind, die Bereiche von Konturen des anfänglichen digitalen Bildes zu detektieren, Bestimmungsmittel (MD), die in der Lage sind, die Größe, als Anzahl von Pixeln, jedes Konturbereichs zu bestimmen, und Vergrößerungsmittel, die in der Lage sind, jeden Konturbereichs mithilfe eines Software-Tools, das in Abhängigkeit von der Größe des jeweiligen Konturbereichs aus einer Menge von Software-Tools zur Vergrößerung gewählt wird, zu vergrößern.

**10.** Vorrichtung nach dem vorhergehenden Anspruch, wobei die Vergrößerungsmittel Schärfebearbeitungsmittel umfassen, welche umfassen: erste Umwandlungsmittel (MCAL), die in der Lage sind, Pixelniveau-Informationen des Konturbereichs in anfängliche Hauptinformationen umzuwandeln, die zwischen einem minimalen Wert und einem von der Amplitude der Kontur abhängigen Hauptwert liegen, Schärfe-Unterbearbeitungsmittel, die in der Lage sind, eine Schärfebearbeitung an diesen anfänglichen Hauptinformationen durchzuführen, um endgültige Hauptinformation zu gewinnen, und zweite Umwandlungsmittel (MTRI), die in der Lage sind, die endgültigen Hauptinformation in endgültige Niveau-Informationen umzuwandeln.

**11.** Anzeigesystem, insbesondere Plasmabildschirm, welches eine Vorrichtung nach einem der Ansprüche 9 bis 10 umfasst.

**Claims**

**1.** Method, implemented by computer, of processing an initial digital image comprising contour zones, the said method comprising a phase of magnifying the initial image into a magnified digital image, **characterized in that** the magnifying phase comprises a step of detection where the contour zones of the initial digital image are detected, a step of determination where the size, in terms of number of pixels, of each contour zone is determined, and a step of magnifying each contour zone with the aid of a software tool, chosen as a function of the size of each contour zone, from among a set of magnifying software tools.

**2.** Method according to Claim 1, in which the software tool chosen for the step of magnifying the contours comprises a contour zone sharpness processing, which comprises a conversion of the information regarding level of pixels of the contour zone into initial main information (step 2), lying between a minimum value, and a main value dependent on the amplitude of the contour, a sharpness sub-processing performed on these initial main information so as to obtain final main information (steps 3 to 10), and a conversion of the final main information into final information regarding levels (step 11).

**3.** Method according to one of the preceding claims, comprising a step of post-filtering of the contour zones of the magnified image, according to a post-filtering software tool, chosen as a function of the dimensions of each contour zone.

**4.** Method according to Claim 3, in which the direction of variation of the pixels of each contour zone is detected, and the post-filtering software tool is chosen as a function of the said direction of variation also.

**5.** Method according to one of the preceding claims, in which the direction of variation of the pixels of each contour zone is detected, and the magnifying software tool is chosen as a function of the said direction of variation also.

**6.** Method according to one of the preceding claims, in which the size of the contour zones is determined according to n dimensions.

**7.** Method according to one of the preceding claims, in which the size of the contour zones is determined according to two dimensions, respectively according to the horizontal axis and the vertical axis.

8. Method according to one of the preceding claims, furthermore comprising a step of displaying the magnified digital image on a screen, in particular a plasma screen.

9. Device for processing an initial digital image comprising at least one contour zone, the said device comprising magnifying means (MAGR) able to magnify the initial image into a magnified digital image, **characterized in that** the magnifying means comprise means of detection able to detect the contour zones of the initial digital image, means of determination (MD) able to determine the size, in terms of number of pixels, of each contour zone, and magnifying means able to magnify each contour zone with the aid of a software tool, chosen as a function of the size of each contour zone, from among a set of magnifying software tools.

10. Device according to the preceding claim, in which the magnifying means comprise sharpness processing means which comprise first conversion means (MCAL) able to convert information regarding the level of pixels of the contour zone into initial main information, lying between a minimum value and a main value dependent on the amplitude of the contour, means of sharpness sub-processing able to perform a sharpness processing on these initial main information so as to obtain final main information, and second conversion means (MTRI) able to convert the final main information into final information regarding levels.

11. Display system, in particular a plasma screen, comprising a device according to one of Claims 9 to 10.

## FIG.1

ECR

IM_IN → | MTR | →IM_OUT→ | MAFF | → | MAT |

MTR

## FIG.2

IM_IN

MAGR          MSCONT          M3

| M1 | M2 |   | MSH | MSV |   | MF |

A          B          C          D          E₁ E₂ E₃

| MUX | →IM_OUT→

MDET1 → | MD | →NH NV→ | MM1 |

MDET1 → | MPOL1 |

## FIG.3

largeur de contour (verticale)

| | 0 | 1 | 2 | 3 | 4 |
|---|---|---|---|---|---|
| **4** | B | C | C | A | A |
| **3** | D | C | C | $E_3$ | A |
| **2** | D | C | $E_3$ | D | D |
| **1** | D | $E_2$ | D | D | D |
| **0** | $E_1$ | C | C | C | B |

largeur de contour (horizontale)

EP 1 808 811 B1

## FIG.4

| | |
|---|---|
| VM / HD | VM / HM |
| HD / VD | VD / HM |

## FIG.5

# FIG.6

largeur de contour (verticale)

largeur de contour (horizontale)

EP 1 808 811 B1

## FIG.7

Calcul de la norme
associée au contour traité ─ étape 1

Normalisation des pixels
des contours ─ étape 2

Calcul de la nouvelle
amplitude de chaque
pixel strictement à
l'intérieur du contour
CA(k) ← gain CA(k) ─ étape 3

Initialisation :
m = 1 ─ étape 4

Comparaison de la
nouvelle amplitude de
chaque pixel CA(k) et de
α = m (amplitude
normalisée du contour) ─ étape 5

si m<gain    si CA(k)>α    étape 6    sinon

CA(k+m) = 1        CA(k+m) = 0 ─ étape 7

m ← m+1 ─ étape 8

Décalage des amplitudes
de chaque pixel à
l'intérieur du contour
normalisé (modulo) ─ étape 9

Tri des amplitudes selon
le sens de variation du
contour ─ étape 10

Multiplication des
amplitudes par
la norme ─ étape 11

# FIG.8

|  | CA(min) | CA(n) | CA(n)1 | CA(n)2 | CA(max) |
|---|---|---|---|---|---|
| étape 2 | 0 | 0,65 | | | 1 |
| étape 3 gain = 3 | 0 | 1,95 | | | 1 |
| étape 4→8 m = 1 | 0 | 1,95 | 1 | | 1 |
| étape 5→8 m = 2 | 0 | 1,95 | 1 | 0 | 1 |
| étape 9 | 0 | 0,95 | 1 | 0 | 1 |
| étape 10 | 0 | 0 | 0,95 | 1 | 1 |

EP 1 808 811 B1

## FIG.9

| | CA(max) | CA(n) | CA(n)1 | CA(n)2 | CA(n+1) | CA(n+1)1 | CA(n+1)2 | CA(min) |
|---|---|---|---|---|---|---|---|---|
| étape 2 | 1 | 0,85 | | | 0,35 | | | 0 |
| étape 3 gain = 3 | 1 | 2,55 | | | 1,05 | | | 0 |
| étape 4→8 m = 1 | 1 | 2,55 | 1 | | 1,05 | 1 | | 0 |
| étape 5→8 m = 2 | 1 | 2,55 | 1 | 1 | 1,05 | 1 | 0 | 0 |
| étape 9 | 1 | 0,55 | 1 | 1 | 0,05 | 1 | 0 | 0 |
| étape 10 | 1 | 1 | 1 | 1 | 0,55 | 0,05 | 0 | 0 |

EP 1 808 811 B1

## FIG.10

Calcul de la norme
associée au contour traité — étape 1

↓

Normalistion des pixels
des contours — étape 2

↓

Somme des amplitudes
normalisées des pixels
strictement à l'intérieur
du contour, et calcul de
la nouvelle amplitude
résultante :
$CA(n) \leftarrow \sum_{k} CA(k)$ gain — étape 3

Initialisation :
m = 1 — étape 4

↓

Comparaison de la
somme et de
$\alpha = m$ (amplitude
normalisée du contour) — étape 5

↓

si m<l    si CA(k)>α          étape 6                    sinon

CA(k+m) = 1                          CA(k+m) = 0 — étape 7

↓

m ← m+1 — étape 8

↓

Décalage de la somme
à l'intérieur du contour
normalisé (modulo) — étape 9

↓

Tri des amplitudes selon
le sens de variation du
contour — étape 10

↓

Multiplication des
amplitudes par
la norme — étape 11

## FIG.11

|  | CA(max) | CA(n) | CA(n)1 | CA(n)2 | CA(n+1) | CA(n+1)1 | CA(n+1)2 | CA(min) |
|---|---|---|---|---|---|---|---|---|
| étape 2 | 1 | 0,85 | | | 0,35 | | | 0 |
| étape 3<br>gain = 3 | 1 | 3,6 | | | | | | 0 |
| étape 4→8<br>m = 1,2 | 1 | 3,6 | 1 | 1 | | | | 0 |
| étape 5→8<br>m = 3,4,5 | 1 | 3,6 | 1 | 1 | 1 | 0 | 0 | 0 |
| étape 9 | 1 | 0,6 | 1 | 1 | 1 | 0 | 0 | 0 |
| étape 10 | 1 | 1 | 1 | 1 | 0,6 | 0 | 0 | 0 |

EP 1 808 811 B1

## FIG.12

|  | CA(max) | CA(n) | CA(n+1) | CA(min) |
|---|---|---|---|---|
| étape 2 | 1 | 0,85 | 0,35 | 0 |
| étape 3 gain = 1 | 1 | 1,2 |  | 0 |
| étape 4→8 | 1 | 1,2 | 1 | 0 |
| étape 9 | 1 | 0,2 | 1 | 0 |
| étape 10 | 1 | 1 | 0,2 | 0 |

EP 1 808 811 B1

# FIG.13

EP 1 808 811 B1

**EP 1 808 811 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **XIN LI ; MICHAEL T.** Orchard : New edge directed interpolation. *IEEE Trans. On Image Processing,* 2001, vol. 10 (10), 1521-1527